# EUROPEAN PATENT APPLICATION

(11) **EP 2 444 632 A1**
(43) Date of publication of application: **25.04.2012**
(21) Application number: 10188042.5
(22) Date of filing: 19.10.2010
(51) Int. Cl.: F02C 3/34, F02C 6/18, F02C 9/16, F01K 23/10

(54) **Method for regulating the flue gas recirculation of a power plant**

(71) Applicant: Alstom Technology Ltd, 5400 Baden (CH)
(72) Inventor: Rofka, Stefan, 5415, Nussbaumen (CH); Sander, Frank, 5415, Rieden (CH); Benz, Eribert, 5413, Birmenstorf (CH); Guethe, Felix, 4056, Basel (CH); Stankovic, Dragan, 5415, Nussbaumen (CH); Syed, Khawar, 5452, Oberrohrdorf (CH); Nicklas, Martin, 5430, Wettingen (CH)

(57) **Abstract**

The method for regulating the flue gas recirculation (FGR) of a power plant (1) comprises regulating the flue gas recirculation (FGR) of the basis on the NOₓ emissions.

## Description

### TECHNICAL FIELD

The present invention relates to a method for regulating the flue gas recirculation of a power plant.

### BACKGROUND OF THE INVENTION

US 2008/0,010,967 discloses a power plant with a gas turbine unit and a steam turbine unit having a steam generator receiving the flue gases from the gas turbine unit for steam generation; the flue gases discharged from the steam generator are partly recirculated back to the compressor inlet and partly discharged to the environment. The gas turbine unit has a CO₂ capture unit.

WO 2010/072 710 discloses a power plant also having a gas turbine unit and a steam turbine unit with a steam generator fed with the flue gases of the gas turbine unit. The power plant of WO 2010/072 710 also has a system for partly recirculating the flue gases to the compressor inlet and a CO₂ capture unit in a different arrangement.

### SUMMARY OF THE INVENTION

The present invention provides a method for regulating the flue gas recirculation of a power plant with recirculated flue gases, in order to optimise both power and NOₓ emissions.

The technical aim, with these and further aspects, are attained according to the invention by providing a method in accordance with the accompanying claims.

### BRIEF DESCRIPTION OF THE DRAWINGS

Further characteristics and advantages of the invention will be more apparent from the description of a preferred but non-exclusive embodiment of the method illustrated by way of non-limiting example in the accompanying drawings, in which:
Figures 1 and 2 are two different schematic views of power plants comprising a gas turbine unit, a steam turbine unit, flue gas recirculation and a CO₂ capture unit;
Figures 3-6 show the relationship between hot gas temperature and NOₓ emissions for different regulations.

### DETAILED DESCRIPTION OF EMBODIMENTS OF THE INVENTION

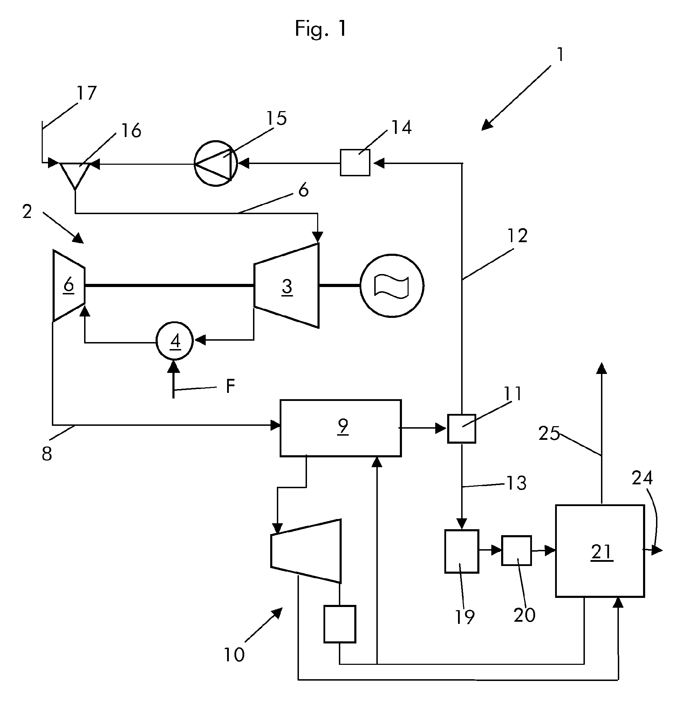

Figure 1 shows a power plant 1 that can implement the method in embodiments of the invention.

This power plant 1 has a gas turbine unit 2 with compressor 3, combustion chamber 4 (into which a fuel F is fed) and turbine 6.

The flue gases 8 discharged from the turbine 6 are supplied into a steam generator 9 of a steam turbine unit 10.

Downstream of the steam generator 9 a splitter 11 is provided that divides the flue gases 8 in a recirculated flow 12 and discharged flow 13.

The recirculated flow 12 is cooled (in a cooler 14) and is then introduced (by a fan 15) into a mixer 16 where it is mixed with fresh air 17 to be fed to the compressor 3 inlet (i.e. to the gas turbine unit inlet).

The discharged flow 13 is also cooled (in a cooler 19) and is supplied via a fan 20 to a CO₂ capture unit 21 to extract the CO₂ (stored in 24) and discharge the flue gases so treated to the atmosphere via 25.

With reference to this power plant 1, the method for regulating the flue gas recirculation comprises regulating the flue gas recirculation FGR (FGR or flue gas recirculation is the ratio between the recirculated flow 12 typically measured after the cooler 14 and the flue gases 8) on the basis of the NOₓ emissions.

In particular, a set value for the NOₓ emissions is provided, and the flue gas recirculation FGR is regulated to achieve the set NOₓ emissions.

Advantageously, the set value can either be constant or can be regulated or adjusted during operation.

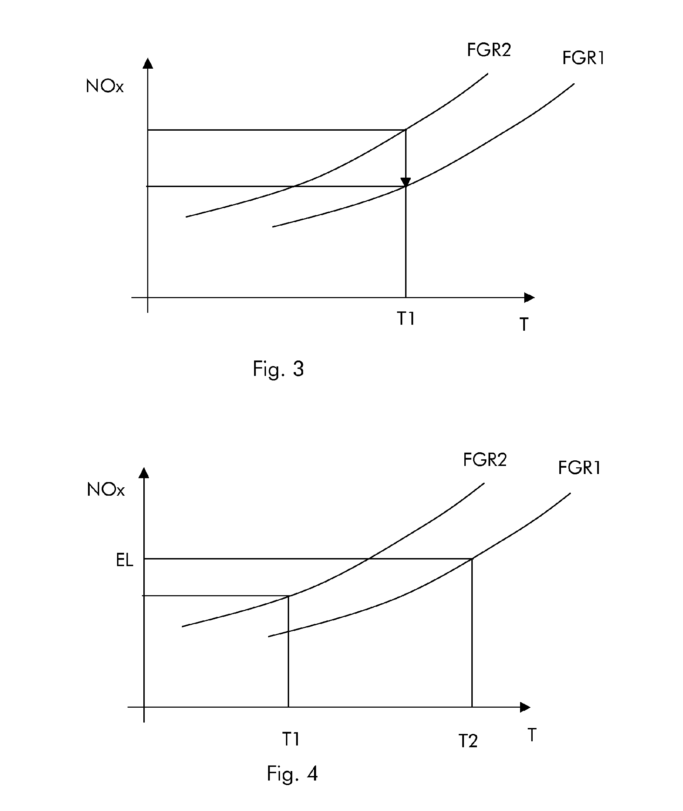

With reference to figure 3, the relationship between temperature (temperature of the hot gases generated in the combustion chamber 4 and to be expanded in the turbine 6) and NOₓ emissions is shown; in this figure (and in all the other figures) FGR1 > FGR2.

As shown, since for a given temperature a regulation of the FGR allows the NOₓ to be regulated (i.e. at a constant temperature T1 by switching from FGR2 to FGR1, i.e. by increasing the FGR, the NOₓ emissions are reduced), and since power depends on the temperature of the hot gases, FGR can be used to optimise NOₓ emissions and power.

In a particular embodiment, also the hot gas temperature T is regulated in accordance with the regulation of the flue gas recirculation FGR.

### EXAMPLE 1 (figure 4)

When operating without flue gas recirculation (FGR2 = 0) the hot gas temperature has a first value T1 and when operated with flue gas recirculation (FGR1 > 0) the hot gas temperature is regulated to a second value T2 higher than the first value T1.

For example, as shown in figure 4, the hot gas temperature T is regulated at its highest value T2 compatible with the NOₓ emission limit EL.

In this case the hot gas temperature is increased from the traditional temperature T1 to a temperature T2 that is compatible with the materials and the FGR is increased to FGR1 to meet the NOₓ emission limits EL.

This regulation allows higher power and efficiency to be achieved without increasing the NOₓ emissions.

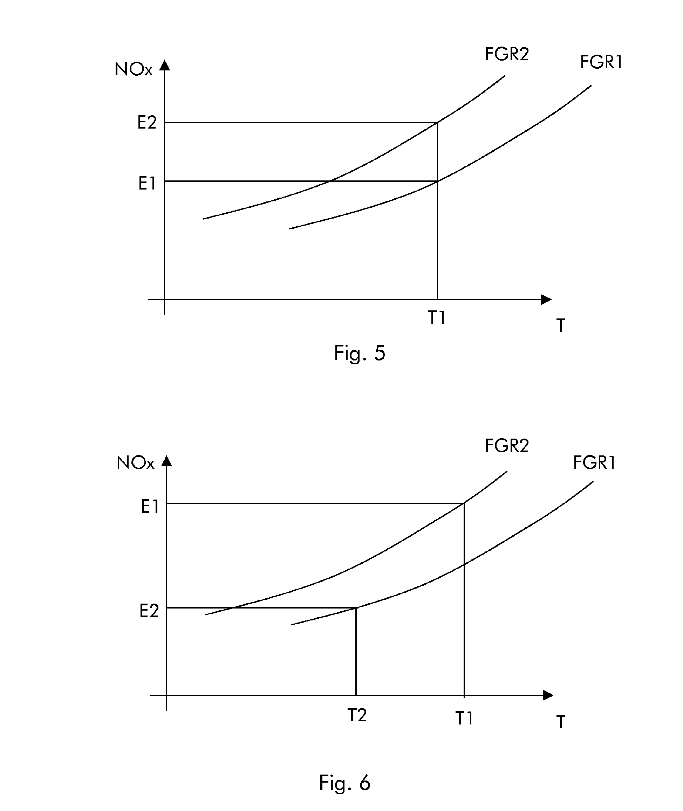

### EXAMPLE 2 (figure 5)

Alternatively, when operating without flue gas recirculation (FGR2 = 0) the hot gas temperature has a first value T1 and also when operated with flue gas recirculation (FGR1 > 0) the hot gas temperature is regulated at substantially this first value T1 to achieve low NOₓ emissions.

From figure 5 it is clear that when increasing the FGR from FGR2 = 0 to FGR1 > 0 the NOₓ emissions decrease from E2 to E1.

### EXAMPLE 3 (figure 6)

When operating without flue gas recirculation (FGR2 = 0) the hot gases temperature has a first value T1 and when operating with flue gas recirculation (FGR1 > 0) the hot gas temperature is regulated to a second value T2 lower than the first value T1.

From figure 6 it is evident that with this regulation a very low amount of NOₓ emissions is achieved; i.e. the NOₓ emissions decrease from E2 to E1.

In particular, the hot gas temperature can also be regulated at its lowest value compatible with the lean blow off conditions.

### FURTHER EMBODIMENTS

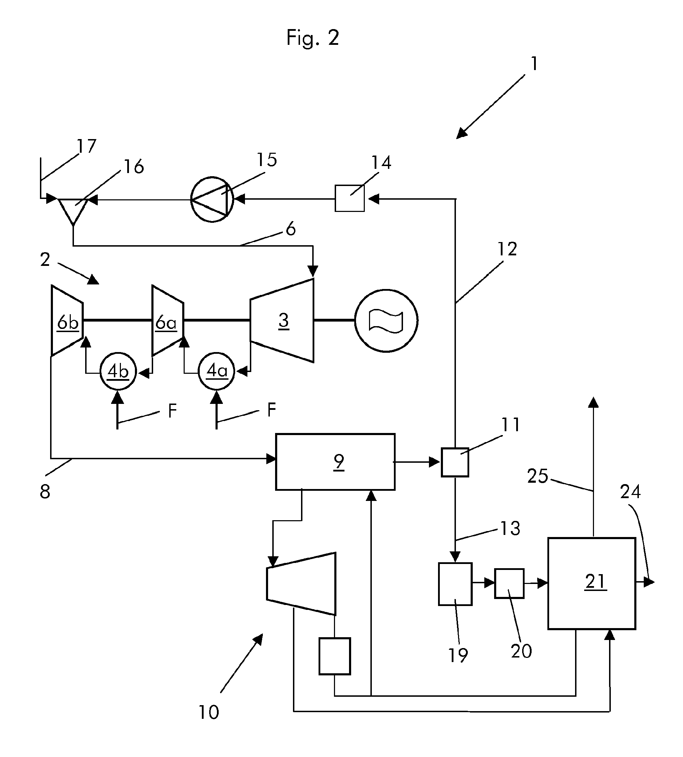

Figure 2 shows a power plant having substantially the same features as the power plant of figure 1; in particular this power plant has a sequential combustion, i.e. it has a first combustion chamber 4a (fed with a fuel F), a high pressure turbine 6a, a second combustion chamber 4b fed with the flue gases generated in the first combustion chamber 4a and partially expanded in the high pressure turbine 6a (and also fed with a fuel F), and a low pressure turbine 6b. Naturally also different schemes are possible, for example the power plant can have two gas turbine units, with a second gas turbine unit that is fed with the hot gases originating from a first gas turbine unit.

The other references indicate elements equal or similar to those already described with reference to the power plant in figure 1.

In this case, the hot gas temperature that is regulated in accordance with the regulation of the flue gas recirculation FGR is that of those hot gases generated in the second combustion chamber 4b.

This regulation is particularly advantageous because the power mainly depends on the temperature of the hot gases generated in the second combustion chamber.

Naturally the features described may be independently provided from one another.

In practice the materials used and the dimensions can be chosen at will according to requirements and to the state of the art.

### REFERENCE NUMBERS

1 power plant
2 gas turbine unit
3 compressor
4, 4a, 4b combustion chamber
6, 6a, 6b turbine
8 flue gases
9 steam generator
10 steam turbine unit
11 splitter
12 recirculated flow
13 discharged flow
14 cooler
15 fan
16 mixer
17 fresh air
19 cooler
20 fan
21 CO₂ capture unit
24 CO₂ storing
25 flue gas discharge
FGR1 first value for FGR
FGR2 second value for FGR
T, T1, T2 temperature of the hot gases generated in combustion chamber
E1, E2 value for NOₓ emissions
EL limit value for NO_{X} emissions F fuel

## Claims

1. Method for regulating the flue gas recirculation (FGR) of a power plant (1) comprising a gas turbine unit (2) whose flue gases (8) are at least partly mixed with fresh air (17) and supplied to a gas turbine unit inlet, the method comprising regulating the flue gas recirculation (FGR) on the basis on the NOₓ emissions.

2. Method according to claim 1, **characterised by**:
- providing a set value for the NOₓ emissions, and
- regulating the flue gas recirculation (FGR) to achieve the set NOₓ emissions.

3. Method according to claim 2, **characterised in that** the set value can either be constant or can be regulated during operation.

4. Method according to claim 1, **characterised in that** within the at least a combustion chamber (4, 4a, 4b) a fuel (F) is burnt to generate hot gases that are expanded in the turbine (6, 6a, 6b), wherein the hot gas temperature is regulated in accordance with the regulation of the flue gas recirculation (FGR).

5. Method according to claim 4, **characterised in that** the hot gas temperature is regulated at its highest value compatible with the NOₓ emissions.

6. Method according to claim 4, **characterised in that** when operating without flue gas recirculation (FGR) the hot gases temperature has a first value (T1), wherein when operated with flue gas recirculation (FGR) the hot gas temperature is regulated at a second value (T2) higher than the first value (T1) .

7. Method according to claim 4, **characterised in that** when operating without flue gas recirculation (FGR) the hot gases temperature has a first value (T1), wherein also when operated with flue gas recirculation (FGR) the hot gas temperature is regulated at substantially this first value (T1) to achieve low NOₓ emissions.

8. Method according to claim 4, **characterised in that** when operated without flue gas recirculation (FGR) the hot gas temperature has a first value (T1), wherein when operated with flue gas recirculation (FGR) the hot gas temperature is regulated to a second value (T2) lower than the first value (T1).

9. Method according to claim 4, **characterised in that** the hot gas temperature is regulated to its lowest value compatible with the lean blow off conditions.

10. Method according to claim 1, **characterised in that** it is implemented in a gas turbine unit (2) comprising a compressor (3), a first combustion chamber (4a), a high pressure turbine (6a), a second combustion chamber (4b) at least partly fed with the flue gases generated in the first combustion chamber (4a) and at least partially expanded in the high pressure turbine (6a), and a low pressure turbine (6b).

11. Method according to claim 10, **characterised in that** the gas turbine unit (2) is a sequential combustion gas turbine.

12. Method according to claim 4 and 10 or 4 and 11, **characterised in that** the hot gas temperature that is regulated in accordance with the regulation of the flue gas recirculation (FGR) is that of those hot gases generated in the second combustion chamber (4b).
